# EUROPEAN PATENT APPLICATION

(11) **EP 4 129 862 A1**
(43) Date of publication of application: **08.02.2023**
(21) Application number: 21189807.7
(22) Date of filing: 05.08.2021
(51) Int. Cl.: B65G 1/00, B65G 60/00

(54) **A PLANT AND A METHOD FOR FORMING COMPOUND PALLET UNITS**

(71) Applicant: Fameccanica.Data S.p.A., 66020 San Giovanni Teatino (CH) (IT)
(72) Inventor: FAIETA, Fabrizio, I-66020 San Giovanni Teatino (Chieti) (IT); GALANTE, Dario, I-66020 San Giovanni Teatino (Chieti) (IT)
(74) Representative: Marchitelli, Mauro

(57) **Abstract**

A plant for forming compound pallet units (20), comprising a plurality of master pallet units (10), and an automatic robotic apparatus (34) comprising a de-stacking robot (46) configured for removing product layers (14) from the tops of master pallet units (10) positioned in a de-stacking area (44) and for placing add-on product layers (16, 18) on top of a master pallet unit (10) positioned in a stacking station (36), so as to form in the stacking station (36) a compound pallet unit (20) having a height (H3) greater than the height (H1) of the master pallet unit (10).

## Description

### Field of the invention

The present invention relates in general to the field of packaging, in particular to the field of packaging of consumer products.

More specifically, the invention relates to a plant for forming compound pallet units.

Embodiments of the present invention also relate to a method for forming compound pallet units.

### Description of the related art

Consumer products are typically manufactured by machines having a very high production rate, typically of several hundred pieces per minute.

The products at the output of the manufacturing machines are typically wrapped in primary packaging units, e.g. in flexible paper or plastic sheets. Typically, a certain number of primary packaging units are packaged in secondary packaging units, e.g cardboard boxes.

In the large distribution of consumer products, the secondary packaging units are arranged in pallet units for shipping, e.g. via road trucks.

A pallet unit comprises a pallet base and a plurality of stacked product layers, each product layer being formed by a plurality of secondary packaging units, e.g. cardboard boxes.

A pallet base is a flat transport structure, which supports goods in a stable fashion while being lifted by a forklift, a pallet jack, a front loader, a jacking device, or an erect crane. The pallet base is the structural foundation of a product load which allows handling and storage efficiencies. Goods or shipping containers are often secured on a pallet base with strappings, stretch wrap or shrink wrap.

The pallet units are formed by automatic palletizer and stored in warehouses before being loaded on trucks for shipping to destination.

The dimensions of the pallet bases are standard, but the height of the pallet units may vary depending on a number of variables and restrictions, such as height limits of palletizers, warehouses, doorways, etc.

Often, because of these restrictions, the pallet units have a height below the maximum shipping height, which is the maximum height of cargo which can be transported on regular road trucks. Typically in European standard road transports, the maximum shipping height is about 2.70 m.

In order to maximize efficiency of the road transports, it would be desirable that the height of the pallet units to be shipped is substantially equal to the maximum shipping height. However, due to physical restrictions related to the facilities in which the pallet units are formed and stored, in many cases it is not possible to form the pallet units with a height substantially equal to the maximum shipping height. In such cases, the transport efficiency is penalized in that the trucks are not loaded to the maximum capacity.

In these cases, in order to improve the transport efficiency, additional product layers may be added manually to pallet units having a height below the maximum shipping height before loading the pallet units on the trucks. However, this involves a great use of manpower and the occupation of a considerable space for adding additional product layer on the pallet units.

### Object and summary of the invention

The object of the present invention is to provide a plant and a method for forming pallet units which overcome the problem and limitations of the prior art.

In accordance with the present invention, this object is achieved by a plant having the features of claim 1 and by a method having the features of claim 8.

Optional features of the invention form the subject of the dependent claims.

The claims are an integral part of the disclosure submitted in relation to the invention.

### Brief description of the drawings

Further characteristics and advantages of the invention will become clear from the following description, given purely as a non-limiting example, with reference to the attached drawings, wherein:
- Figure 1 is a schematic side view of a master pallet unit,
- Figures 2-5 are schematic side views of different embodiments of compound pallet units,
- Figure 6 is a schematic plan view of a packaging plant according to an embodiment of the present invention, and
- Figure 7 is a schematic front view of an automatic robotic apparatus of a packaging plant according to the present invention.

### Detailed description

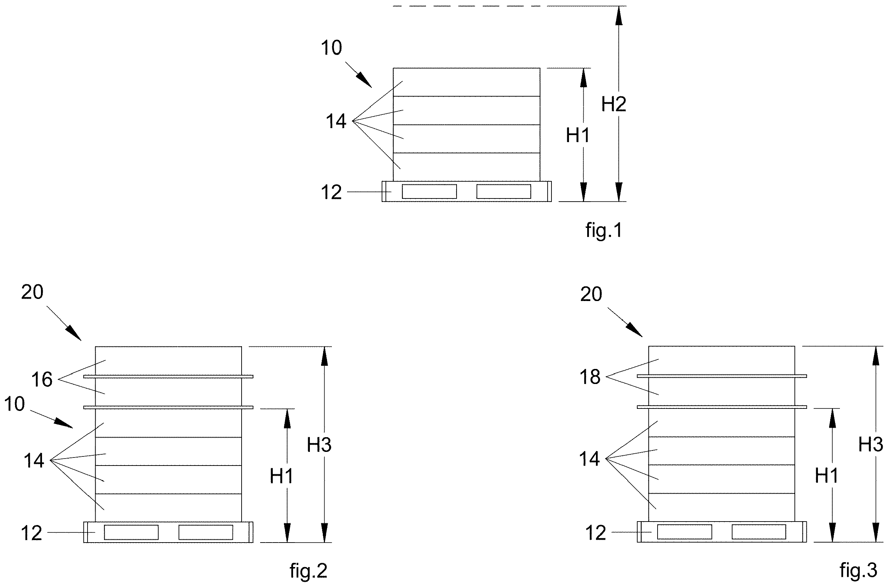

With reference to figure 1, numeral reference 10 indicates a master pallet unit. The master pallet unit 10 comprises a pallet base 12 and at least one product layer 14. In the example shown in the drawings the master pallet unit 10 comprises a plurality of stacked product layers 14. The master pallet unit 10 has a height H1 below the maximum shipping height H2. The maximum shipping height H2 is the maximum height of cargo which can be transported on regular road trucks. Typically in European standard road transports, the maximum shipping height H2 is about 2.70 m.

In order to maximize efficiency of the road transports, it is desirable that the height of the pallet units to be shipped is substantially equal to the maximum shipping height H2.

When the master pallet units 10 have a height H1 below the maximum shipping height H2, add-on product layers 16, 18 may be added on top of the master pallet units 10, as shown in figures 2 and 3, so as to form a compound pallet unit 20 having a height H3 substantially equal to the maximum shipping height H2.

In the case shown in figure 2, the add-on product layers 16 are equal to the product layers 14 forming the master pallet unit 10. In the case shown in figure 3, the add-on product layers 18 are different from the product layers 14 forming the master pallet unit 10.

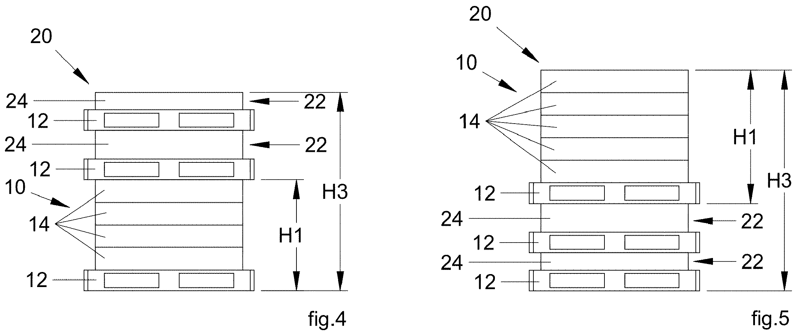

With reference to figure 4, the compound pallet unit 20 may comprise one or more auxiliary pallet units 22 added on top of the master pallet unit 10. Each auxiliary pallet unit 22 comprises a pallet base 12 and at least one product layer 24 which may be equal to or different from the product layers 14 forming the master pallet unit 10.

With reference to figure 5, one or more auxiliary pallet units 22 may be set below the master pallet unit 10.

The arrangement of figure 4 is used when the auxiliary pallet units 22 weigh less or are less resistant than the master pallet units 10 and the arrangement of figure 5 is used when the auxiliary pallet units 22 weigh more or are more resistant than master pallet units 10, so as to obtain compound pallet units 20 which are more stable and with greater protection of the more fragile product layers.

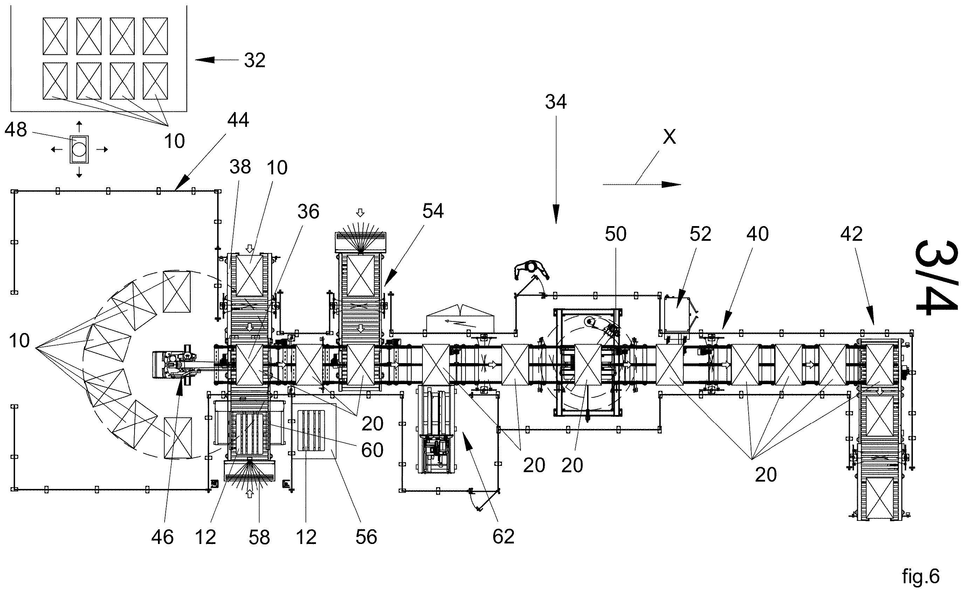

Figure 6 schematically shows the layout of a plant 30 for forming the compound pallet units 20 shown in figures 2-5 starting from existing master pallet unit 10 having a height H1 below the maximum shipping height H2.

The plant 30 comprises a plurality of master pallet units 10 having a height H1 below the maximum shipping height H2 stored in a storage area 32.

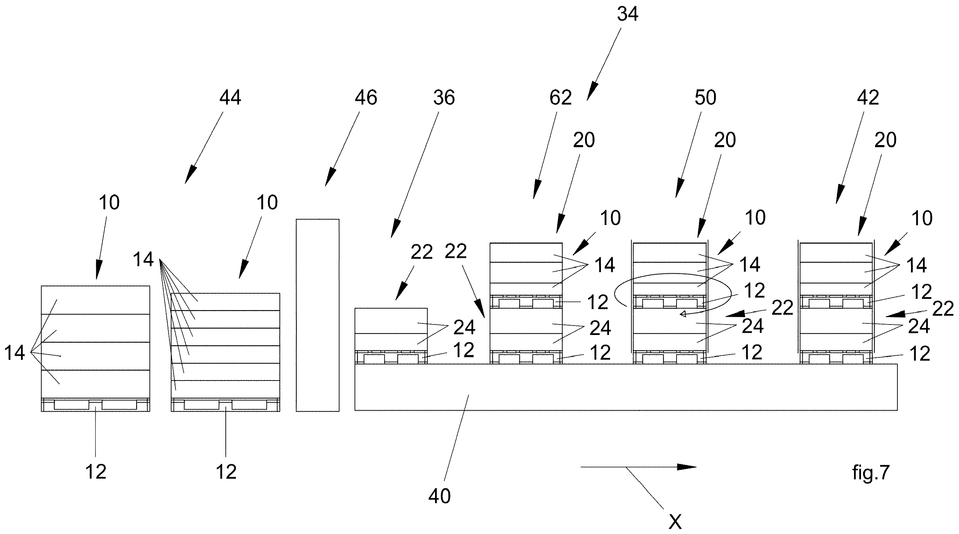

With reference to figures 6 and 7, the plant 30 comprises an automatic robotic apparatus 34, comprising a stacking station 36 configured for receiving individual master pallet units 10 coming from the storage area 32. In the stacking station 36 compound pallet units 20 or auxiliary pallet units 22 are formed as disclosed below. The automatic robotic apparatus 34 may comprise an input conveyor 38 configured for advancing individual master pallet units 10 to the stacking station 36.

The automatic robotic apparatus 34 comprises a main conveyor 40 for removing the compound pallet units 20 or the auxiliary pallet units 22 from the stacking station 36. The main conveyor 40 has a horizontal transport surface which extends in a direction X from the stacking station 36 towards an output station 42.

The automatic robotic apparatus 34 comprises a de-stacking area 44 wherein a plurality of master pallet units 10 are positioned. The plant 30 may comprise at least one automated guided vehicle 48 configured for transporting individual master pallet units 10 from the storage area 32 to the input conveyor 38 and to the de-stacking area 44.

A de-stacking robot 46, e.g. an anthropomorphic robot, is positioned in the de-stacking area 44. In the de-stacking area 44 the master pallet units 10 may be positioned in a semicircle around the de-stacking robot 46. The master pallet units 10 positioned in the de-stacking area 44 may contain products different from each other.

The de-stacking robot 46 is configured for removing product layers from the tops of the master pallet units 10 positioned in the de-stacking area 44 and for adding add-on product layers 16, 18 on top of the master pallet unit 10 positioned in the stacking station 36, so as to form in the stacking station 36 compound pallet units 20 having a height H3 greater than the height H1 of the master pallet units 10. The height H3 of the compound pallet units 20 may be substantially equal to the maximum shipping height H2.

When a compound pallet unit 20 is completed in the stacking station 36, the main conveyor 40 removes the compound pallet unit 20 from the stacking station 36 and transports the compound pallet units 20 in the direction X towards the output station 42.

The automatic robotic apparatus 34 may comprise a securing unit 50 positioned on the main conveyor 40 between the stacking station 36 and output station 42. The securing unit 50 may be configured for securing individual compound pallet units 20 with securing elements such as strappings, stretch wrap or shrink wrap.

A labelling station 52 configured for applying labels to the compound pallet units 20 may be provided on the main conveyor 40 downstream of the wrapping unit 52.

The automatic robotic apparatus 34 may comprise an auxiliary input station 54 positioned on the main conveyor 40 and configured for feeding to the main conveyor 40 compound pallet units 20 formed manually outside the automatic robotic apparatus 34, e.g. formed by adding by forklift product layers to master pallet units 10.

The automatic robotic apparatus 34 may comprise a pallet base store 56 containing a plurality of stacked pallet bases 12. A pallet base de-stacker 58 is provided for picking individual pallet bases 12 from the top of stacked pallet bases 12 in the pallet base store 56 and for feeding individual pallet bases 12 to the stacking station 36, e.g. by a pallet base conveyor 60.

The de-stacking robot 46 may remove product layers from the top of the master pallet units 10 positioned in the de-stacking area 44 and place the product layers on a pallet base 12 positioned in the stacking station 36, so as to form in the stacking station 36 an auxiliary pallet unit 22.

The automatic robotic apparatus 34 may comprise a lifting unit 62 positioned on the main conveyor 40 and configured for lifting individual master pallet units 10 and auxiliary pallet units 22 from the horizontal transport surface of the main conveyor 40.

The automatic robotic apparatus 34 may operate under the control of an electronic control unit having installed therein a computer program configured for controlling the de-stacking robot 46, the main conveyor 40 and all the other units of the plant 30 to form various combinations of compound pallet units 20 starting from master pallet units 10.

The operation of the automatic robotic apparatus 34 is the following.

A plurality of master pallet units 10 having a height H1 less than the maximum shipping height H2 are stored in the storage area 32. At least one automated guided vehicle 48 transports a plurality of master pallet units 10 from the storage area 32 to the de-stacking area 44.

The product layers of the master pallet units 10 positioned in the de-stacking area 44 are not secured. If the master pallet units 10 stored in the storage area 32 are secured, e.g. with strappings, stretch wrap or shrink wrap, such securing elements are removed before positioning the master pallet units 10 in the de-stacking area 44. The master pallet units 10 positioned in the de-stacking area 44 may contain different products.

For forming a compound pallet unit 20 as shown in figures 2 and 3 a master pallet unit 10 is positioned in the stacking station 36. The product layers of the master pallet units 10 positioned in the stacking station 36 may be secured, e.g. with strapping, stretch wrap or shrink wrap. The de-stacking robot 46 removes product layers from the tops of the master pallet units 10 positioned in the de-stacking area 44 and adds add-on product layers 16, 18 on top of the master pallet unit 10 positioned in the stacking station 36. The add-on product layers 16, 18 may be equal to or different from the product layers 14 of the master pallet unit 10 positioned in the stacking station 36. Therefore, in the stacking station 36 a compound pallet unit 20 is formed, having a height H3 greater than the height H1 of the master pallet units 10. The height H3 may be substantially equal to the maximum shipping height H2. When the desired height of the compound pallet unit 20 is reached, the compound pallet unit 20 is transported in the direction X by the main conveyor 40. In the securing unit 50 the add-on product layers 16, 18 or the whole compound pallet unit 20 may be secured, e.g. with strappings, stretch wrap or shrink wrap. The compound pallet unit 20 may be labelled in the labelling station 52 and then sent to the output station 42. From the output station 42 the compound pallet units 20 may be transported to a temporary storing area before being loaded on trucks for shipping.

As shown in figure 7, for forming a compound pallet unit 20 as shown in figure 5 a master pallet unit 10 is positioned in the stacking station 36. The master pallet unit 10 is moved to the lifting unit 62 without adding add-on product layers 16, 18. The lifting unit 62 lifts the master pallet unit 10 from the horizontal transport surface of the main conveyor 40. Then, an empty pallet base 12 is positioned in the stacking station 36 and the de-stacking robot 46 removes product layers from the tops of the master pallet units 10 positioned in the de-stacking area 44 and places one or more product layers 24 on the pallet base 12 positioned in the stacking station 36, so as to form an auxiliary pallet unit 22. When the auxiliary pallet unit 22 is complete, the main conveyor 40 moves the auxiliary pallet unit 22 to the lifting unit 62 and positions the auxiliary pallet unit 22 below the master pallet unit 10 which is kept in a raised position by the lifting unit 62. Then, the lifting unit 62 sets the master pallet unit 10 over the auxiliary pallet unit 22.

For adding a second auxiliary pallet unit 22 to the compound pallet unit 20, the lifting unit 62 raises the unit formed by the master pallet units 10 and by a first auxiliary pallet unit 22 and a second auxiliary pallet unit 22 is positioned below the first auxiliary pallet unit 22.

For forming a compound pallet unit 20 as shown in figure 4, an empty pallet base 12 is positioned in the stacking station 36 and the de-stacking robot 46 removes product layers from the tops of the master pallet units 10 positioned in the de-stacking area 44 and places one or more product layers 24 on the pallet base 12 positioned in the stacking station 36, so as to form an auxiliary pallet unit 22. When the auxiliary pallet unit 22 is complete, the main conveyor 40 moves the auxiliary pallet unit 22 to the lifting unit 62. The lifting unit 62 lifts the auxiliary pallet unit 22 from the horizontal transport surface of the main conveyor 40. Then, a master pallet unit 10 is positioned in the stacking station 36 and, without adding add-on product layers 16, 18, it is moved to the lifting unit 62 below the auxiliary pallet unit 10 which is kept in a raised position by the lifting unit 62. Then, the lifting unit 62 sets auxiliary pallet unit 22 over the master pallet unit 10.

For adding a second auxiliary pallet unit 22 to the compound pallet unit 20, a second auxiliary pallet unit 22 is formed in the stacking station 36 and is positioned in the lifting unit 62 below the first auxiliary pallet unit 22. The lifting unit 62 sets the first auxiliary pallet unit 22 over the second auxiliary pallet unit 22 and then raises the stack formed by the two auxiliary pallet units 22. Then, the master pallet unit 10 is positioned in the lifting unit 62 below the stack formed by the two auxiliary pallet units 22 and the two auxiliary pallet units 22 are positioned over the master pallet unit 10.

The compound pallet units 20 comprising the auxiliary pallet units 22 may be secured, e.g. with strappings, stretch wrap or shrink wrap, and labelled. The auxiliary pallet units 22 may be labelled separately from the master pallet unit 10.

The automatic robotic apparatus 34 may form compound pallet units 20 with any possible combination of add-on product layers 16, 18 and auxiliary pallet units 22 in order to obtain compound pallet units 20 with a height H3 which optimizes shipping.

Of course, without prejudice to the principle of the invention, the details of construction and the embodiments can be varied, even significantly, with respect to those illustrated here without departing from the scope of the invention as defined by the following claims.

## Claims

1. A plant for forming compound pallet units (20), comprising a plurality of master pallet units (10) stored in a storage area (32), wherein each master pallet unit (10) comprises a pallet base (12) and a plurality of stacked product layers (14), and an automatic robotic apparatus (34), wherein the automatic robotic apparatus (34) comprises:
- a stacking station (36) configured for receiving one master pallet unit (10),
- a de-stacking area (44) wherein a plurality of master pallet units (10) is positioned, and
- a de-stacking robot (46) configured for removing product layers (14) from the tops of master pallet units (10) positioned in the de-stacking area (44) and for placing add-on product layers (16, 18) on top of the master pallet unit (10) positioned in the stacking station (36), so as to form in the stacking station (36) a compound pallet unit (20) having a height (H3) greater than the height (H1) of the master pallet unit (10).

2. The plant of claim 1, wherein the automatic robotic apparatus (34) comprises a main conveyor (40) having a horizontal transport surface, configured for removing the compound pallet units (20) from the stacking station (36) and for advancing said compound pallet units (20) toward an output station (42).

3. The plant of claim 1 or 2, wherein the automatic robotic apparatus (36) comprises a pallet base store (56) containing a plurality of pallet bases (12), and a pallet base de-stacker (58) configured for picking individual pallet bases (12) from the pallet base store (56) and for feeding individual pallet bases (12) to said stacking station (36), and wherein said de-stacking robot (46) is configured for removing product layers (14) from the tops of the master pallet units (10) positioned in the de-stacking area (44) and for placing product layers (22) on a pallet base (12) positioned in the stacking station (36) so as to form in the stacking station (36) an auxiliary pallet unit (22).

4. The plant of claim 3, wherein the automatic robotic apparatus (34) comprises a lifting station (62) positioned on said main conveyor (40) and configured for lifting individual master pallet units (10) or auxiliary pallet units (22), and for forming a compound pallet unit (20) by placing at least one auxiliary pallet unit (22) on top of a master pallet unit (10) or a master pallet unit (10) on top of at least one auxiliary pallet unit (22).

5. The plant of any of the preceding claims, wherein the automatic robotic apparatus (34) comprises a securing unit (50) positioned on said main conveyor (40) and configured for securing individual compound pallet units (20) with strappings, stretch wrap or shrink wrap.

6. The plant of any of the preceding claims, wherein the automatic robotic apparatus (34) comprises an auxiliary input station (54) positioned on said main conveyor (40) and configured for feeding on the main conveyor (40) manually formed compound pallet units (20) .

7. The plant of any of the preceding claims, comprising at least one automated guided vehicle (48) configured for transporting individual master pallet units (10) from said storage area (32) to the automatic robotic apparatus (34).

8. A method for forming compound pallet units (20), comprising:
- providing a plurality of master pallet units (10) stored in a storage area (32), wherein each master pallet unit (10) comprises a pallet base (12) and at least one stacked product layer (14),
- positioning at least one of said master pallet units (10) in a de-stacking area (44),
- positioning one master pallet unit (10) or a pallet base (12) in a stacking station (36),
- removing product layers (14) from the tops of said master pallet units (10) positioned in the de-stacking area (44) and placing add-on product layers (16, 18) on top of the master pallet unit (10) positioned in the stacking station (36) or on a pallet base (12) so as to form in the stacking station (36) a compound pallet unit (36) having a height (H3) greater than height of said master pallet unit (10).

9. The method of claim 8, comprising removing the compound pallet units (20) from the stacking station (36) and advancing said compound pallet units towards an output station (42) along a horizontal transport surface.

10. The method of claim 8 or 9, comprising providing a plurality of pallet bases (12) in a pallet base store (56), picking a pallet base (12) from the pallet base store (56), positioning said pallet base (12) in said stacking station (36), and forming in the stacking station (36) an auxiliary pallet unit (22) by removing product layers (14) from the top of said master pallet units (10) positioned in the de-stacking area (44) and placing said product layers (24) on said pallet base (12) positioned in the stacking station (36).

11. The method of claim 10, comprising lifting individual master pallet units (10) or auxiliary pallet units (22) from said horizontal transport surface, and forming a compound pallet unit (20) by placing at least one auxiliary pallet unit (22) on top of a master pallet unit (10) or a master pallet unit (10) on top of at least one auxiliary pallet unit (22).

12. The method of claim 11, comprising placing at least one auxiliary pallet unit (22) on top of a master pallet unit (10) when the auxiliary pallet unit (22) weighs less or is less resistant than the master pallet unit (10), and placing at least one auxiliary pallet unit (22) below a master pallet unit (10) when the auxiliary pallet unit (22) weighs more or is more resistant than the master pallet unit (10).

13. The method of any of the claims 8-12, comprising securing individual compound pallet units (20) with strappings, stretch wrap or shrink wrap.

14. The method of any of claims 8 to 13, comprising transporting individual master pallet units (10) from said storage area (32) to said de-stacking area (44) by at least one automated guided vehicle (48).

15. A computer program configured for implementing a method according to any of claims 8-14.
